# EUROPEAN PATENT APPLICATION

(11) **EP 4 520 474 A1**
(43) Date of publication of application: **12.03.2025**
(21) Application number: 24183311.0
(22) Date of filing: 20.06.2024
(51) Int. Cl.: B23Q 3/155

(54) **HOLDER OF A TOOL CLAMP FOR A MAGAZINE FOR AUTOMATIC EXCHANGE OF MACHINING TOOLS**

(30) Priority: 06.09.2023 CZ 20230344
(71) Applicant: VÚTS, a.s., Liberec XI - Ruzodol I 460 01 Liberec (CZ)
(72) Inventor: Richter, Ales, 460 15 Liberec, Liberc XV-Stary Harcov (CZ)
(74) Representative: Musil, Dobroslav

(57) **Abstract**

The invention relates to a holder (3) of a tool clamp (1), in particular for a magazine (2) for automatic exchange of machining tools (15) of a machine tool, which comprises a storage fork (4) with a longitudinal axis (O) on which is arranged the centre (S) of storage space (P) and with a pair of oppositely arranged supporting arms (41) which are adapted to collaborate with the tool clamp (1), wherein a locking shackle (5) is assigned to the storage fork (4), the locking shackle (5) being adapted to lock the tool clamp (1) in the storage fork (4), wherein the locking shackle (5) is arranged swingingly about a horizontal axis (R) between the locked position and the unlocked position and the locking shackle (5) is coupled to an unlocking means. The locking shackle (5) is rigid in itself and is coupled to a locking spring (6) which is adapted to hold the locking shackle (5) in the locked position. The locking shackle (5) comprises at least one rigid locking arm (51) which is arranged below the at least one supporting arm (41) of the storage fork (4) and which is, in the direction away from the location of the swinging mounting (8) of the locking shackle (5) beyond the centre (S) of the storage space (P), provided with a horizontal jaw projection (53) which is adapted to engage the lower ring (133) of the flange (13) of the tool clamp (1). The locking arm (51) is provided with an unlocking tongue (54) in the direction away from the swinging mounting (8) of the locking shackle (5) beyond the horizontal jaw projection (53), which is directed obliquely away from the storage fork (4) and which is provided with a longitudinal recess (542, 542a) on the longitudinal edge of its upper side (541) facing the longitudinal axis (O) of the holder (3).

## Description

### Technical field

The invention relates to a holder of a tool clamp, especially for a magazine for automatic change of machining tools, comprising a storage fork with a longitudinal axis on which the centre of storage space is arranged, with a pair of oppositely arranged supporting arms which are adapted to cooperate with the tool clamp, the storage fork being associated with a locking shackle, adapted to lock the tool clamp in the storage fork, wherein the locking shackle is arranged swingingly about a horizontal axis between the locked position and the unlocked position and the locking shackle is coupled to an unlocking means.

### Background art

As computer-controlled machine tools become more sophisticated and faster, the requirements for tool exchange speed are also increasing. Computer-controlled machine tools are often provided with magazines for automatic exchange of machining tools between individual operations, when a batch is changed or when a tool wears out. The machining tool is clamped in a tool clamp (sometimes also called a "tool holder"), with which it is ready for exchange in a magazine, where it is placed in a holder. To speed up tool exchange, the tool clamp with the machining tool is sometimes inserted into/removed from the magazine directly by a machine tool spindle, and it is advantageous if the magazine body with the stored tool clamp is approaches the machine tool spindle before the exchange and moves away from it after the exchange, and if necessary, it is covered with a cover to be protected from chips flying off during machining. The problem is that during fast movement/ high acceleration/high deceleration of the magazine body, the tool clamp is subjected to relatively high centrifugal/inertial forces, which puts stress on the holder, the holder wears out quickly and must be exchanged frequently. High stress on the clamp occurs especially if its longitudinal axis is oriented in the direction of the action of centrifugal/seismic force and/or is oriented in the direction of the action of the gravitational force/component of the gravitational force, e.g., in a magazine with a vertical rotating disc or in a magazine with a straight beam which is transversely tilted out of/into a protective housing.

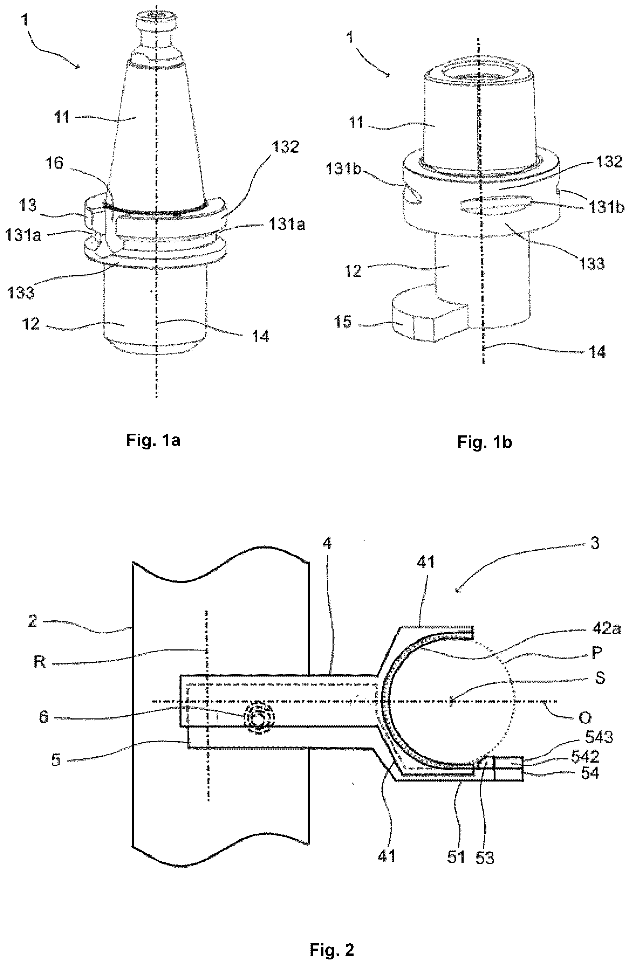

Tool clamps 1 known in the background art, e.g. tool clamps 1 shown in Figs. 1a and 1b, are substantially rotary bodies comprising a shank 11 to be clamped into the cavity of the machine tool spindle, a tool clamping portion 12 for clamping the machining tool 15 into the tool clamp 1 and a flange 13 arranged between the shank 11 and the tool clamping portion 12 with a horizontal handling groove 131a, 131b arranged between the upper and lower rings 132, 133 of the flange 13. The handling groove 131a, 131b is substantially V-shaped and widens from the axis 14 of the tool clamp 1 to the circumference of the flange 13. The two most common shapes of the handling groove are a radial handling groove 131a (Fig. 1a), which is also known, for example, from US 5352073 A, and a straight handling groove 131b (Figure 1b), which is also known, for example, from US 2003185638 A1.

Document CZ 288525 B6 discloses a holder for a tool clamp with a plastic storage clamp, which comprises on the upper side a thin safety spring sheet metal - a planchet - with two arms. Each arm is in its end portion, beyond the free ends of the arms of the plastic clamp, shaped such that first is arranged a downwardly oriented projection, provided with a horizontal jaw projection with a horizontal pressing edge, then is arranged an upwardly oriented unlocking projection in the direction away from the magazine, and beyond the unlocking projection, a downwardly inclined unlocking tongue is arranged. The spring-loaded sheet metal is pre-tensioned to secure the tool clamp in the holder. Unlocking the spring-loaded sheet metal when removing the tool clamp from the holder is performed by bending the spring-loaded sheet metal caused by vertical approach of the machine tool spindle and the spindle stopping on the unlocking projections. Unlocking the spring-loaded sheet metal when inserting the tool clamp into the holder is performed by bending the spring planchet caused by horizontal approach of the spindle with the tool clamp on the unlocking tongues and the subsequent stopping of the spindle on the unlocking projections. The disadvantage is that the holder with a flexible plastic storage clamp secured by a spring sheet metal is not strong enough for heavy tool clamps or for the fast-moving/accelerating/decelerating magazines which are used today. Another disadvantage is that when inserting/removing the tool clamp into/out of the holder, the lower side of the spindle sleeve slides horizontally on the unlocking projections formed on the planchet, which not only wears out the sleeve, but in particular rapidly wears out and thereby weakens the spring-loaded sheet metal of the planchet at the location of the unlocking projection, which can lead to breakage of the end portion of the planchet and its collision with the spindle face. Another disadvantage is that the horizontally oriented jaw projections pass through the inside of the handling groove when inserting/removing the tool clamp into/out of the holder, so that the holder cannot be used for tool clamp types without radial handling grooves.

Document US 3526033 A discloses a tool clamp magazine with a circular body around the periphery of which are spaced storage recesses with prismatic supporting elements, wherein below each recess is arranged a safety leaf spring, a planchet, with two arms. In its end portion, in the direction away from the centre of the magazine body beyond the supporting element, the arm of the spring planchet is provided with a horizontal jaw projection with a horizontal pressing edge, and further beyond it is provided with a downwardly inclined unlocking edge. Towards the centre of the body, beyond the storage recess, a sleeve with an unlocking ball is arranged above the planchet. Unlocking the planchet when removing the tool clamp from the recess is performed by vertically pressing the unlocking ball with the lower side of the sleeve of the vertically approaching spindle. Unlocking the planchet when inserting the tool clamp into the recess is carried out by vertically pressing the unlocking edges by the edge and by the lower side of the lower ring of the tool clamp flange housed in the horizontally approaching spindle. The disadvantage of such a magazine with a relatively thin flexible locking planchet (leaf spring) is that it is not strong enough for magazines with fast moving/accelerating/decelerating bodies, e.g., straight horizontal beams rotating around a horizontal axis, etc. Another disadvantage is that the sliding of the lower ring of the tool clamp repeatedly over the edge which is arranged on the planchet at the bending point of the unlocking edge can lead to its weakening and to breakage of the unlocking edge.

Document US 2002028735 A1 discloses a gripper of a manipulator for picking up a machining tool from a magazine and passing it to a spindle or head of a machine tool, comprising a support rack, above which is arranged a locking shackle with a pair of rigid locking arms which are provided at their ends with contact surfaces to contact the tool gripper. The locking shackle is swingingly mounted about a horizontal axis of rotation in the gripper body. The main disadvantage of the gripper according to US 2002028735 A1 is that it is not provided with a means for unlocking the locking shackle by the spindle and/or by the tool holder, and therefore it must be provided with an unlocking means with a drive, e.g. a cylinder, motor, etc., for unlocking the locking shackle. A further disadvantage of the gripper is that its robust locking shackle is arranged above the storage fork, at the level of the shank of the tool holder, which prevents the clamping of the tool holder in the spindle, so that the tool gripper cannot be removed from the gripper directly by the spindle but must first be placed in another holder or magazine.

The object of the invention is to eliminate or at least mitigate the disadvantages of the background art, in particular to provide a holder of a tool clamp which has a sufficiently firm grip for use in magazines with rapidly rotating bodies in which centrifugal force and/or gravitational force act in the direction of the longitudinal axis of the holder.

### Summary of the invention

For clarity of description, the holder is described throughout the description of the invention and in the claims as a horizontal holder into which a tool clamp is inserted/ from which it is removed from by horizontal displacement of a spindle. However, the present invention is not limited to a horizontal holder, but also includes differently oriented holders, for example a vertical holder into which the tool clamp is inserted/ from which it is removed by vertical displacement of the spindle, and for which the terms of the description "at the top/at the bottom" correspond to "on the right/on the left", the terms of the description "horizontal/vertical" correspond to "vertical/horizontal", etc.

The object of the invention is achieved by a holder of a tool clamp, in particular for a magazine for automatic exchange of machining tools of a machine tool, with a locking shackle which is rigid in itself and is coupled to a locking spring which is adapted to hold the locking shackle in the locked position, wherein the locking shackle comprises at least one rigid locking arm which is arranged below at least one supporting arm of a storage fork and which, in the direction from the location of the swinging mounting of the locking shackle beyond the centre of storage space, is provided with a horizontal jaw projection which is adapted to engage a lower ring of a tool clamp flange, wherein the locking arm is provided, in the direction away from the location of the swinging mounting of the locking shackle beyond the horizontal jaw projection, with an unlocking tongue directed obliquely away from the storage fork the unlocking tongue being provided with a longitudinal recess on the longitudinal edge of its upper side facing the longitudinal axis of the holder.

The advantage of the holder according to the above-described invention is its sufficient rigidity, thanks to which it resists the action of the tool clamp with a relatively heavy machining tool placed in it at high speed/high acceleration, for example during rapid rotation of the magazine body with holders, when the holder is quickly tilted down from the horizontal position for removal/inserting the machining tool downwards into a vertical position below the magazine cover, etc. Another advantage of the holder is that when placing or removing the tool clamp with a machining tool into/from the magazine, it is unlocked only by the action of the spindle of the machine tool or the tool clamp moved by the spindle of the machine tool, so that neither the holder nor the magazine needs to be equipped with another drive to overwhelm the force of the locking spring, e.g. hydraulic cylinder, pneumatic cylinder, electric motor, etc. Another advantage is that the holder can also be used for tool clamps which, clamped in the spindle, have a relatively small vertical clearance between the upper side of the clamp flange and the lower side of the spindle sleeve, due to the absence of locking elements on the upper side of the storage arms. Yet another advantage of the holder is that it can also be used for machining tools which, when clamped in the tool clamp, have relatively little vertical clearance between the lower side of the clamp flange and the upper side of the machining tool, due to the fact that the locking shackle, although thick enough to be rigid in itself, is relatively short and low, thanks to the locking arm, which is arranged below the supporting arm and is provided with an unlocking tongue with a longitudinal recess.

The longitudinal recess on the upper side of the unlocking tongue is made as a longitudinal bevel with the advantage of reducing the areas of contact between the lower ring of the tool camp flange and the upper side of the unlocking tongue when the holder is unlocked by horizontal displacement of the tool clamp with the machining tool, and thus to reduce friction and reduce wear of the holder and the tool clamp.

The longitudinal bevel is arranged along the entire length of the unlocking tongue and is smoothly followed by a bevel on the upper side of the jaw projection. Such a bevel has a uniform width along the entire length of the unlocking tongue and is advantageously easy to manufacture.

The thickness of the locking arm of the holder described above is, at the location of the jaw projection, at least 30 %, more preferably at least 50 %, even more preferably at least 60 % of the thickness of the supporting arm which is arranged above the locking arm. This achieves an advantageous rigidity of the locking arm, as well as an advantageous size of the pressure surface of the jaw projection, for sufficiently firm securing of the tool clamp, especially against the action of tilting forces in the direction against the jaw projection.

The rigid locking arm with an unlocking tongue is made of steel sheet metal having a thickness of 4 mm to 5 mm, wherein the supporting arm which is arranged above the locking arm is made of steel sheet metal having a thickness of 8 mm to 12 mm, with the advantage of easy fabrication of the arms and the advantage of their flat shape which allows, in the locked position of the holder, the flat top side of the sheet metal locking arm to be pressed against the flat lower side of the sheet metal supporting arm, thereby stiffening the locked holder.

The locking shackle is designed as a double reversible lever, to shorten the locking shackle between the location of its swinging mounting and the location of the jaw projection, preferably to increase the rigidity of the locking shackle.

The locking shackle is designed as an unequal-arm double reversible lever, with the advantage of reducing the installation length of the locking shackle in the magazine or shortening the length of the locking shackle protruding from the magazine, depending on the requirements, depending on a specific type of magazine, a specific type of machine tool spindle, a specific type of tool holder, a specific type of machining tool, etc.

In the direction away from the locking arm beyond the location of the swinging mounting of the locking shackle, a sensor for detecting the locked/unlocked state of the locking shackle is assigned to the end of the locking shackle, e.g., an induction sensor, an ultrasonic sensor, a touch switch, etc. The advantage of such an arrangement of the locking shackle and the sensor is the maximization of the lift of the detected location of the locking shackle between the correct locked position and the correct unlocked position, thus increasing the reliability of detection, without lengthening the locking shackle, and therefore without increasing its installation length and/or reducing its rigidity.

The storage fork of the holder is provided with a drift stone which protrudes along the longitudinal axis of the holder into the storage space, in the direction away from the location of the swinging mounting of the locking shackle towards the centre of the storage space, preferably to fix the selected horizontal orientation of the tool clamp placed in the holder.

The shackle of the holder with an upwardly oriented unlocking pin which is arranged on the longitudinal axis of the holder, in the direction towards the location of the swinging mounting of the locking shackle beyond the supporting arms of the storage fork, and which protrudes above the supporting arms of the storage fork, advantageously minimising the risk of lateral contact between the machine tool spindle and the unlocking pin when placing the tool clamp horizontally into the holder, thereby reducing the chance of damage/wear out of the holder and/or spindle.

The locking shackle of the holder of the tool clamp is provided with a pair of mirror-opposed locking arms, with an advantage for the overall rigidity and reliability of the holder.

### Brief description of drawings

The invention is schematically represented in the drawings, wherein Fig. 1a shows a tool clamp with a radial handling groove known from the background art, Fig. 1b shows a tool clamp with a straight handling groove known from the background art, Fig. 2 shows a holder of a tool clamp according to the present invention, Fig. 3 shows the holder of the tool clamp according to the present invention with a locking shackle designed as a double-armed lever, Fig. 4 shows the holder of the tool clamp according to the present invention with a sensor of detection of the locked/unlocked state of the locking arm, Fig. 4a shows a perspective view of the supporting and locking arms of the holder of the tool clamp of Fig. 4, Fig. 5 represents a vertical cross-section of the holder according to the present invention when it is unlocked by horizontal approach of a spindle with the tool clamp, Fig. 6 shows a vertical cross-section of the holder according to the present invention when it is unlocked by vertical approach of the spindle.

### Examples of embodiment

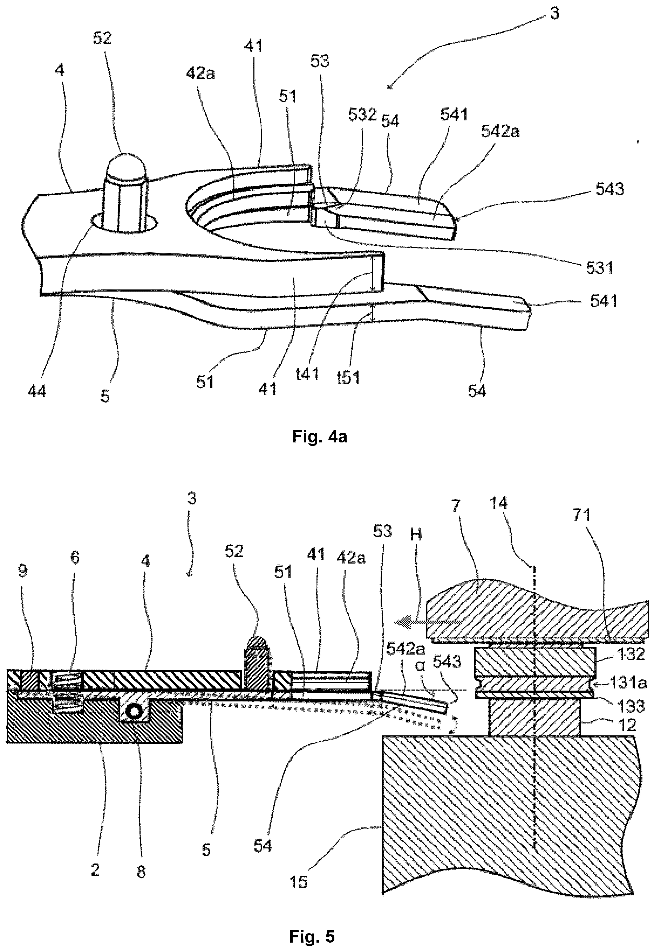

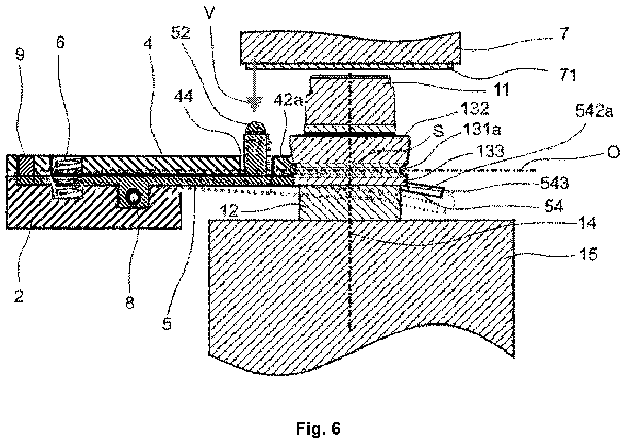

A holder 3 of a tool clamp 1 (Figs. 2, 3, 4, 4a, 5 and 6), especially for a magazine 2 for automatic exchange of tool holders 1 with machining tools 15, comprises a storage fork 4 with a pair of mirror-opposed rigid supporting arms 41 for supporting the tool clamp 1. Storage space P is arranged between the supporting arms 41 of the storage fork 4 for storing the tool clamp 1 in the storage fork 4. The storage space P has a centre S. A horizontally oriented longitudinal axis O of the holder 3 passes through the centre S of the storage space P between the supporting arms 41 (Figs. 2, 3, 4 and 6). If the tool clamp 1 is placed in the storage fork, its vertically oriented axis 14 passes through the centre S of the storage space P (Figure 6). A locking shackle 5 is arranged below the storage fork 4, that is, on the side thereof facing the tool clamping portion 12 of the tool clamp 1 (if the tool clamp 1 is placed in the storage fork 4). The locking shackle 5 is rigid in itself and is coupled to a locking spring 6 which is adapted to hold the locking shackle 5 in the locked position, e.g., by a vertical locking spring 6 (Figs. 5 and 6). The locking shackle 5 comprises at least one rigid locking arm 51 which is arranged below at least one supporting arm 41 of the storage fork 4, for locking the tool clamp 1 in the storage fork 4.

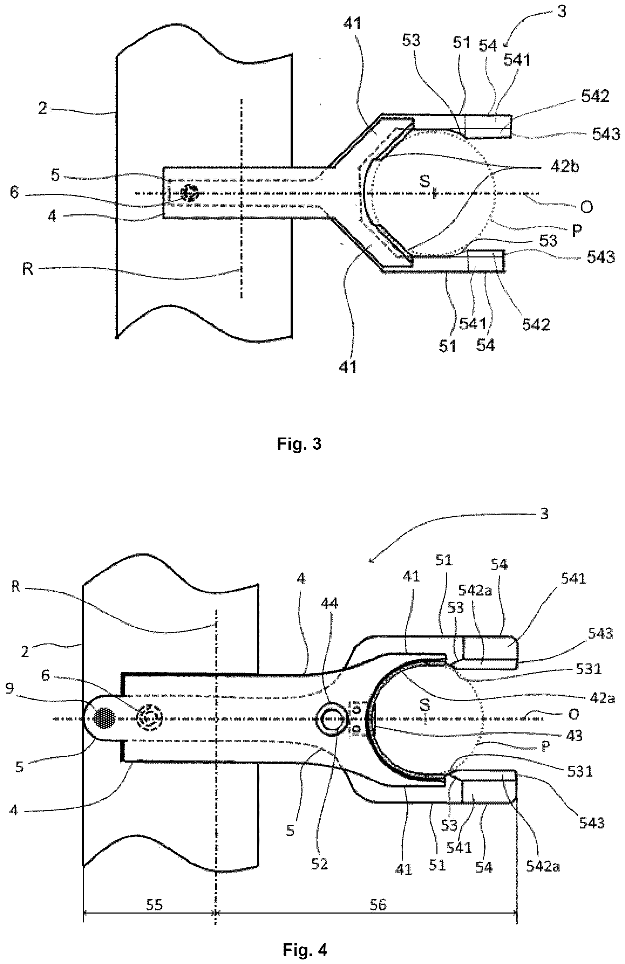

For example, the locking shackle 5 comprises a pair of mirror-opposed oriented rigid locking arms 51, arranged below the supporting arms 41 of the storage fork 4 (Figs. 3, 4 and 4a).

The storage fork 4, the swinging mounting 8 and the locking spring 6 are, for example, housed in the magazine 2, e. g., in the magazine 2 body, in an unillustrated body of the holder 3 mounted in the magazine 2 body, etc.

The storage fork 4 is provided with at least one prismatic supporting projection 42a, 42b on the inner sides of its supporting arms 41, facing the longitudinal axis O of the holder 3, for supporting the tool clamp 1 in its handling groove 131a, 131b, e.g., with a circular prismatic supporting projection 42a to rest in the radial handling groove 131a (Figs. 2 and 4), with a pair of straight prismatic supporting projections 42b to rest in the straight handling grooves 131b (Figure 3), etc.

The storage fork 4 is, for example, provided with a drift stone 43 (Fig. 4) which protrudes along the longitudinal axis O of the holder 3 into the storage space P, in the direction away from the location of the swinging mounting 8 of the locking shackle 5 towards the centre S of the storage space P, to engage the guide groove 16 of the tool clamp 1, thereby securing it in the selected lateral orientation, against rotation about its axis 14.

The locking arm 51 is, in the direction from the swinging mounting 8 of the locking shackle 5 beyond the centre S of the storage space P, for example beyond the end of the supporting arm 41, provided with a horizontal jaw projection 53 (Figs. 2, 3, 4 and 4a) which is adapted to engage the lower ring 133 of the flange 13 of the tool clamp 1, for securing the tool clamp 1 with the machining tool 15 against falling out of the storage fork 4, e.g., the horizontal jaw projection 53 is provided with a horizontally oriented pressure edge, a horizontally oriented pressure surface 531 (Fig. 4a), etc. The locking arm 51 is, in the direction away from the location of the swinging mounting 8 of the locking shackle 5 beyond the horizontal jaw projection 53, provided with an unlocking tongue 54 which is directed obliquely downwardly from the storage fork 4, at an angle α of inclination of 5 to 15 °, more preferably 8 to 12 °.

The unlocking tongue 54 is, for example, provided with a longitudinal recess 542, 542a (Figs. 2, 3, 4 and 4a) on the longitudinal edge of its upper side 541 facing the longitudinal axis O of the holder 3, for contact with the tool clamp 1 when it is moved along the unlocking tongue 54, e.g., with a U-shaped notch, an L-shaped notch, a longitudinal bevel 542a, etc.

The longitudinal recess 542 comprises a lowered leading edge 543 arranged at the end of the unlocking tongue 54 for horizontal engagement of the lower edge and/or side of the lower ring 133 of the flange 13 of the tool clamp 1 with the upper side 541 of the unlocking tongue 54 (Figs. 2, 3, 4 and 4a). The holder 3 with the locking arm 51 with the unlocking tongue 54 having a lowered leading edge 543 has, in the locked state of the holder 3, sufficient vertical clearance between the supporting projection 42a, 42b and the leading edge 543 (Fig. 5), for unlocking the locking shackle 5 and for moving the tool clamp 1 into the storage fork 4 by horizontal displacement of the tool clamp 1 only, without vertical displacement of the tool clamp 1 and without an additional unlocking device, such as a hydraulic cylinder, pneumatic cylinder, etc. This maintains the minimum thickness of the locking arm 51 necessary for its sufficient rigidity, as well as its maximum permissible length and height, in order to eliminate the risk of collision with the machining tool 15 clamped in the tool clamp 1, which is inserted into/removed from the holder 3.

The longitudinal recess 542 is, for example, realized as a longitudinal bevel 542a (Figs. 4 and 4a) of the upper side 541 of the unlocking tongue 54 to minimize contact with the tool clamp 1 as it moves along the unlocking tongue 54, thereby reducing their friction and wear.

The longitudinal bevel 542a of the upper side 541 of the unlocking tongue 54 is, for example, smoothly followed by a bevel 532 on the upper side of the jaw projection which is adjacent to the unlocking tongue 54. This provides the unlocking tongue 54 with a longitudinal bevel 542a having substantially the same width and slope along its entire length, which facilitates the manufacture of the locking shackle 5.

The pressure surface 531 of the jaw projection 53 of the locking arm 51 is adapted in shape and size to press against the peripheral wall of the flange 13 of the tool clamp 1, it is, for example, conical, flat, cylindrical (Figs. 4 and 4a), according to the shape of the tool clamp 1 for which the holder 3 is intended.

The jaw projection 53 is, for example, arranged over the entire thickness of the locking arm 51 at the location of the arrangement of the jaw projection 53, to maximize the size of the pressure surface 531 of the jaw projection 53.

The thickness t51 of the locking arm 51 is, at the location of the jaw projection 53, for example, at least 30 %, more preferably at least 40 %, even more preferably at least 60 % of the thickness t41 of the supporting arm 41 which is arranged above the locking arm 51, to achieve sufficient locking strength of the tool clamp 1 by the locking arm 51.

In the embodiment shown in Fig. 4a, the thickness t51 of the locking arm 51 at the location of the jaw projection 53 is, for example, 40 % to 50 % of the thickness t41 of the supporting arm 41 which is arranged above the locking arm 51, in order to achieve sufficient locking strength of the holder 3 at its advantageously low installation height below the supporting arm 41.

The storage fork 4 and the locking shackle 5 are made, for example, of steel sheet metal (Figs. 4a, 5 and 6) by cutting, bending, machining, etc., for greater rigidity of the holder 3, and for flexible pressing of the flat upper side of the locking arm 51 the flat lower side of the supporting arm 41 and thereby strengthening the locked holder 3. The thickness t51 of the rigid locking arm 51 is, for example, 4 mm to 5 mm, to securely secure the tool clamp 1 against the action of bending forces and at the same time to minimize the installation height of the holder 3 below the supporting arm 41, wherein the thickness t41 of the above arranged supporting arm 41 is, for example, 8 mm to 12 mm, for sufficiently firm support of the tool clamp 1 beyond its handling groove 131a, 131b and optionally also for resting on the peripheral wall of the upper ring 132 of the flange 13.

In the embodiment shown in Fig. 2, the locking shackle 5 is, for example, realized as a rigid single reversible lever, the end of which is oriented towards the magazine 2 and is rotatably swingingly mounted about the horizontal axis R of rotation and which is sprung by a locking spring 6 arranged between the horizontal axis R of rotation and the locking arm 51.

In the embodiment shown in Figs. 3, 4, 5 and 6, the locking shackle 5 is, for example, implemented as a rigid double reversible lever, the first arm 55 (Fig. 4) of which, oriented towards the magazine 2, is sprung by the locking spring 6, and on the second arm 56 (Fig. 4) of which, oriented away from the magazine 2, the locking arm 51 is arranged to shorten the distance between the swinging mounting 8 and the jaw projection 53, and thus to increase the locking strength of the tool clamp 1 by the locking shackle 5.

The first arm 55 of the locking shackle 5, realized as a double reversible lever, is, for example, shorter than its second arm 56 to shorten the instalment space of the locking shackle 5 in the magazine 2 (Figure 4).

The end of the first arm 55 of the locking shackle 5 realized as a rigid double reversible lever is, for example, associated with a sensor 9 (Figs. 4, 5 and 6) of unillustrated detection of locked/unlocked state of the locking shackle 5, such as an inductive sensor for proximity/deflection of the end of the first arm 55 which is mounted in the magazine 2 body and/or at the end of the storage fork 4 and/or in the holder 3 body (not shown), an ultrasonic sensor for proximity/deflection of the end of the first arm 55, a touch switch (Figs. 5 and 6) switched by the end of the first arm 55, etc. The end of the first arm 55 of the double reversible lever moves during locking/unlocking along a longer path than other points of the locking shackle 5 with which the sensor 9 can be associated, without extending into the working space of the spindle 7 with the tool 15, or without having to increase the length and the installation space of the locking shackle 5 due to the location of the sensor 9. A longer path of movement of the detected location increases the accuracy of detection of the locked/unlocked state of the locking shackle 5, especially when the sensor 9 is economically implemented as a touch switch (Figs. 5 and 6).

The holder 3 of the tool clamp 1, in all the above-described embodiments, is coupled to an unlocking means which comprises an unlocking element and/or unlocking drive, for vertically compressing the locking shackle 5 of the holder 3 with the tool clamp 1 in place. It is provided, for example, with an unillustrated unlocking stop, an unillustrated unlocking projection of the locking shackle 5, an unlocking pin 52 of the locking shackle 5, an unillustrated unlocking ball in a sleeve arranged in the storage fork 4 and/or is, permanently or temporarily only in a certain working position, coupled to an unillustrated gas cylinder, unillustrated hydraulic cylinder, unillustrated electric drive, etc.

In the exemplary embodiment of the holder 3 shown in Figs. 4, 4a, 5 and 6, the locking shackle 5, towards the magazine 2 beyond the supporting arms 41 of the storage fork 4, is provided, vertically transversely from the longitudinal axis O of the holder upwards, with the unlocking pin 52 extending through the hole 44 in the storage fork 4, for the vertical compression of the locking shackle 5 by the vertically approaching spindle 7 of the machine tool, and thus for the vertical compression and unlocking of the locking arm 51 by the vertical approach of the spindle 7.

The holder 3 operates in such a manner that the tool clamp 1 with the tool 15 is placed/removed into/from the storage fork 4 of the holder 3 by horizontal displacement of the spindle 7 of the machine tool and is locked/unlocked in the storage fork 4 by the locking shackle 5.

The locking shackle 5 is locked by applying the locking spring 6 thereto, thereby pressing the locking arm 51 upwardly against the supporting arm 41, wherein the horizontally oriented pressure surface 531 of the jaw projection 53 of the locking arm 51 is pressed against the peripheral wall of the lower ring 133 of the flange 13 of the tool clamp 1, thereby pressing the tool clamp 1 against the supporting projection 42a, 42b of the supporting arm 41 of the storage fork 4, and thus the tool clamp 1 is locked in the holder 3.

In order to unlock the locking shackle 5, when inserting the tool clamp 1 into the holder 3, the spindle 7 of the machine tool with the tool clamp 1 clamped approaches in the horizontal direction H the leading edge 543 of the unlocking tongue 54 of the locking arm 51, wherein, by horizontally displacing the lower edge and/or the lower side of the lower ring 133 of the flange 13 of the tool clamp 1, along the longitudinal recess 542, for example the longitudinal bevel 542a, of the unlocking tongue 54, the unlocking tongue 54 is vertically compressed, thereby tilting down the locking arm 51 and unlocking it. At the same time, the tool clamp 1 is horizontally inserted into the storage fork 4 and rests with the wall of the handling groove 131a, 131b against the supporting projection 42a, 42b/supporting projections 42a, 42b of the supporting arms 41.

To unlock the locking shackle 5 provided with an unlocking pin 52 when removing the tool clamp 1 from the holder 3, the spindle 7 of the machine tool approaches the holder 3 in the vertical direction V, whereby the sleeve 71 of the spindle 7 vertically compresses the unlocking pin 52 of the locking shackle 5. As a result, the locking arm 51 is tilted downwards and is unlocked. At the same time, the shank 11 of the tool clamp 1 is clamped in the sleeve 71 of the spindle 7.

### List of references

- 1: tool clamp
- 11: bit shank
- 12: tool clamping portion
- 13: annular flange
- 131a: radial handling groove
- 131b: straight handling groove
- 132: upper ring of the flange
- 133: lower ring of the flange
- 14: axis of the tool clamp
- 15: machining tool
- 16: guide groove
- 2: magazine
- 3: holder of the tool clamp
- 4: storage fork
- 41: supporting arm
- 42a: circular prismatic supporting projection
- 42b: straight prismatic supporting projection
- 43: drift stone
- 44: hole
- 5: locking shackle
- 51: locking arm
- 52: unlocking pin
- 53: jaw projection
- 531: pressure surface
- 532: bevel of the jaw projection
- 54: unlocking tongue
- 541: upper side
- 542: longitudinal recess
- 542a: longitudinal bevel
- 543: leading edge
- 55: first arm of the lever
- 56: second arm of the lever
- 6: locking spring
- 7: spindle
- 71: spindle sleeve
- 8: swinging mounting
- 9: sensor of detection of the locked/unlocked state of the locking shackle
- V: direction of vertical approach of the spindle
- H: direction of horizontal approach of the spindle
- O: longitudinal axis of the holder
- R: horizontal axis of rotation of the locking shackle
- P: storage space
- S: centre of the storage space
- t51: thickness of the locking arm
- t41: thickness of the supporting arm
- α: angle of inclination of the unlocking tongue in relation to the locking arm

## Claims

1. A holder (3) of a tool clamp (1), in particular for a magazine (2) for automatic exchange of machining tools (15) of a machine tool, which comprises a storage fork (4) with a longitudinal axis (O) on which is arranged the centre (S) of storage space (P) and with a pair of oppositely arranged supporting arms (41) which are adapted to collaborate with the tool clamp (1), wherein a locking shackle (5) is assigned to the storage fork (4), the locking shackle (5) being adapted to lock the tool clamp (1) in the storage fork (4), wherein the locking shackle (5) is arranged swingingly about a horizontal axis (R) between the locked position and the unlocked position and the locking shackle (5) is coupled to an unlocking means, **characterized in that** the locking shackle (5) is in itself rigid and is coupled to a locking spring (6) which is adapted to hold the locking shackle (5) in the locked position, wherein the locking shackle (5) comprises at least one rigid locking arm (51) which is arranged below at least one supporting arm (41) of the storage fork (4) and which is in the direction away from the location of the swinging mounting (8) of the locking shackle (5) beyond the centre (S) of the storage space (P) provided with a horizontal jaw projection (53) which is adapted to engage the lower ring (133) of the flange (13) of the tool clamp (1), wherein the locking arm (51) is, in the direction away from the location of the swinging mounting (8) of the locking shackle (5) beyond the horizontal jaw projection (53), provided with an unlocking tongue (54) which is directed obliquely from the storage fork (4), the unlocking tongue (54) being provided with a longitudinal recess (542, 542a) on the longitudinal edge of its upper side (541) facing the longitudinal axis (O) of the holder (3).

2. The holder (3) of the tool clamp (1) according to the preceding claim 1, **characterized in that** the longitudinal recess (542) is implemented as a longitudinal bevel (542a).

3. The holder (3) of the tool clamp (1) according to the preceding claim 2, **characterized in that** the longitudinal bevel (542a) is arranged along the entire length of the unlocking tongue (54), wherein it is followed smoothly by a bevel (532) on the upper side of the jaw projection (53).

4. The holder (3) of the tool clamp (1) according to any of the preceding claims, **characterized in that** the thickness (t51) of the locking arm (51) is at the location of the jaw projection (53) at least 30 % of the thickness (t41) of the supporting arm (41) which is arranged above the locking arm (51).

5. The holder (3) of the tool clamp (1) according to any of the preceding claims, **characterized in that** the rigid locking arm (51) with the unlocking tongue (54) is made of steel sheet metal having a thickness of 4 mm to 5 mm, wherein the supporting arm (41) which is arranged above the locking arm (51) is made of steel sheet metal having a thickness of 8 mm to 12 mm.

6. The holder (3) of the tool clamp (1) according to any of the preceding claims, **characterized in that** the locking shackle (5) is implemented as a double reversible lever.

7. The holder (3) of the tool clamp (1) according to the preceding claim 6, **characterized in that** the locking shackle (5) is implemented as an unequal-arm double reversible lever.

8. The holder (3) of the tool clamp (1) according to any of the preceding claims 6 or 7, **characterized in that** in the direction away from the locking arm (51) beyond the swinging mounting (8) of the locking shackle (5), a sensor (9) for detecting the locked/unlocked state of the locking shackle (5) is associated with the end of the locking shackle (5).

9. The holder (3) of the tool clamp (1) according to any of the preceding claims, **characterized in that** the storage fork (4) is provided with a drift stone (43) which protrudes along the longitudinal axis (O) of the holder (3) into the storage space (P) in the direction away from the location of the swinging mounting (8) of the locking shackle (5) towards the centre (S) of the storage space (P).

10. The holder (3) of the tool clamp (1) according to any of the preceding claims, **characterized in that** the locking shackle (5) is provided with an upwardly oriented unlocking pin (52) which is arranged on the longitudinal axis (O) of the holder (3) in the direction towards the location of the swinging mounting (8) of the locking shackle (5) beyond the supporting arms (41) of the storage fork (4) and which protrudes above the supporting arms (41) of the storage fork (4).

11. The holder (3) of the tool clamp (1) according to any of the preceding claims, **characterized in that** the locking shackle (5) is provided with a pair of mirror-opposed locking arms (51).
